# EUROPÄISCHE PATENTSCHRIFT

(11) **EP 0 702 782 B1**
(45) Veröffentlichungstag und Bekanntmachung des Hinweises auf die Patenterteilung: **08.12.1999**
(21) Anmeldenummer: 95912994.1
(22) Anmeldetag: 29.03.1995
(51) Int. Cl.: G01K 1/16

(54) **NUGGI-THERMOMETER**
DUMMY-TYPE THERMOMETER
THERMOMETRE DU TYPE SUCETTE

(30) Priorität: 06.04.1994 CH 99994
(43) Veröffentlichungstag der Anmeldung: 27.03.1996
(73) Patentinhaber: ZEWA AG, CH-6052 Hergiswil (CH)
(72) Erfinder: ZEINDLER, Heidi, CH-6030 Ebikon (CH)
(74) Vertreter: Troesch Scheidegger Werner AG
(86) Internationale Anmeldenummer: CH9500067
(87) Internationale Veröffentlichungsnummer: WO9527887

(56) Entgegenhaltungen:
- US-A- 5 186 047

## Beschreibung

Die vorliegende Erfindung betrifft ein Nuggi-Thermometer, mit einem Lippenschild, einem in einer zentralen Oeffnung des Lippenschildes und von diesem abstehend gehaltenen, vorzugsweise hohl ausgebildeten Gummisauger, einem im Gummisauger angeordneten Temperaturfühler und mit durch den Sauger zu einer Temperatur-Messelektronik zum Speichern, Auswerten und Anzeigen der Messwerte führenden elektrischen Leitern.

Bei den bisher bekannten Nuggi-Thermometern der vorstehend beschriebenen Art besteht der Temperaturfühler entweder aus einer schlanken Mess-Sonde, welche sich zum Kopfende des Gummisaugers erstreckt und dort gegebenenfalls in einer Führung gehalten ist, oder das eigentliche Sensorelement ist in einer eingekapselten Flüssigkeit geschützt untergebracht. Bei beiden Ausführungen reagiert der Messfuhler relativ träge auf die zugeführte Wärme (sowohl die Aufwärmung der Schutz- bzw. Uebertragungsflüssigkeit als auch die Uebertragung auf den Messfühler braucht eine gewisse Zeit, da die Körpertemperatur nicht ideal übertragen werden kann). Bei einer verbesserten Ausführungsform wurde der Temperaturfühler in eine Vertiefung in der Saugerinnenwand angeordnet, ohne jedoch die erhoffte rasche Temperaturübertragung zu gewährleisten.

Aufgabe der vorliegenden Erfindung war nun die Schaffung eines Nuggi-Thermometers, welcher ausserordentlich rasch die gemessene Temperatur anzuzeigen vermag.

Dies wird bei einem Nuggi-Thermometer der eingangs definierten Art erfindungsgemäss dadurch erreicht, dass der Temperaturfühler an einem metallischen Verankerungsteil auf der Saugerinnenseite angebracht ist und dass das genannte Verankerungsteil durch die Saugerwand hindurch mit einem weiteren auf der Saugeraussenseite angeordneten flächigen metallischen Gegenelement verbunden ist, so dass Verankerungsteil und Gegenelement in der Saugerwand festgehalten sind.

Vorzugsweise ist der z.B. als Thermistor ausgebildete Temperaturfühler zwischen Verankerungsteil und Gegenelement eingekapselt.

Durch den direkten Kontakt zwischen Zunge und dem metallischen Gegenelement (Kontaktplättchen) wird die Körpertemperatur innert kürzester Zeit an den Temperaturfühler übertragen.

Eine besonders optimale Wirkung wird mit einem Nuggi erzielt, dessen Gummisauger einerseits einen der normalen Lippenstellung entsprechenden flachen Hals und andererseits einen auf der Zungenseite abgeflachten Kopfabschnitt aufweist. Gerade dieser flache Abschnitt wird durch die Zunge durch direkten Kontakt aktiviert, so dass die zu messende Temperatur über das metallische Gegenelement ideal übertragen wird.

Die Erfindung wird nachstehend anhand eines in der Zeichnung dargestellten Ausführungsbeispiels noch etwas näher erläutert. Es zeigt:
- Fig. 1: einen Längsschnitt, rein schematisch, durch ein Nuggi-Thermometer nach der Erfindung;
- Fig. 2: einen vergrösserten Schnitt durch die Temperaturmessstelle des Nuggi-Thermometers, vor dem definitiven Festklemmen in der Saugerwand, und
- Fig. 3: einen entsprechenden Schnitt nach dem Zusammenbau von Verankerungsteil und Gegenelement in der Saugerwand.

Die Zeichnung zeigt einen an sich bekannten Nuggi 1 mit Schild 1', dessen Gummisauger 2 einen flachen Hals 3 (welcher der normalen Mundstellung am naturlichsten angepasst ist) und einen Kopf 4 aufweist, der in einem unteren Bereich 4' (Zungenseite) abgeflacht ist. Diese Nuggiform ist besonders geeignet, bei Kleinkindern eine optimale Ausbildung der Zähne zu unterstützen.

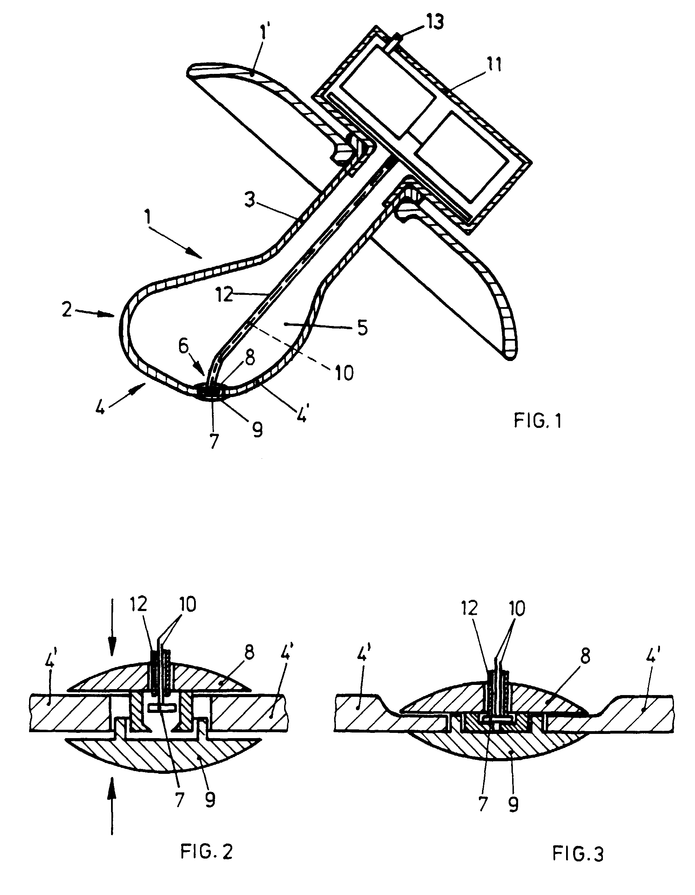

Wie Fig. 1 zeigt, ist im Hohlraum 5 des Gummisaugers 2 ein Temperaturfühler 6 untergebracht, wobei dessen eigentlicher Messteil in einem flächigen metallischen Verankerungsteil 8 mit Gegenelement 9 eingeschlossen ist. Die Teile 8,9 bilden eine Art Druckknopf, in welchem der Temperaturfühler 6 eingekapselt ist.

Der eigentliche Messfühler 7, vorzugsweise als Thermistor ausgebildet, wird über Leiter 10 mit einer in einem Gehäuse 11 untergebrachten Temperatur-Messelektronik zum Speichern, Auswerten und Anzeigen der Messwerte verbunden.

Die Leiter 10 sind vorzugsweise in einem biegsamen Trägermaterial eingebettet (Kunststoffschlauch 12).

Durch die relativ grossflächige Berührungszone zwischen dem metallischen Gegenelement 9, dem Temperaturfühler 7 und dem Verankerungsteil 8 in der Wand des Gummi saugers 2 wird die Wärme im Vergleich zu bekannten Vorrichtungen ausserordentlich schneller an den Fühler 7 übertragen.

Die Berührungszone liegt zudem im Bereich des Gummisaugers 2, welcher von der Zunge direkt aktiviert wird, was die Wirkung noch zusätzlich erhöht.

Die im Gehäuse 11 untergebrachte, an sich bekannte Mess-elektronik, wird über den Schalter 13 ein- bzw. ausgeschaltet. Das Gehäuse 11 enthält neben der Schaltung und einem Display auch die erforderliche Batterie (alles an sich bekannte Bauteile für derartige Thermometer).

Ueber die eingebauten Mikro-Chips kann z.B. folgendes Programm vorgesehen werden:
- Ein- / Ausschalten
- Referenzmessung (Funktionskontrolle)
- evtl. Memory der letzten Messung
- Messbereich (z.B. 32-42° C)
- sobald ein Messwert konstant bleibt, kann ein akustisches Signal ausgelöst und der Messvorgang beendet werden
- automatische Speicherung
- automatische Abschaltung des Gerätes (z.B. nach 10 Min.).

Fig. 2 der Zeichnung illustriert einen Schnitt (vergrössert) durch die eigentliche Messzone, bestehend im wesentlichen aus dem Temperaturfühler 7, eingekapselt zwischen Kontaktteil 8 und Gegenelement 9, bevor die Teile 8,9 mittels eines geeigneten Werzeuges (Zange) zusammengepresst und in der Saugerwand befestigt werden.

Fig. 3 zeigt eine ähnliche Ansicht wie Fig. 2, nachdem die Teile 8,9 gegeneinandergepresst und in der Saugerwand befestigt wurden.

Die Teile 8,9, insbesondere aber Teil 9, bestehen aus gut wärmeleitendem Metall, z.B. Messing. Teil 9 kann zusätzlich verchromt oder gegebenenfalls versilbert sein.

Dank der erfindungsgemässen Konstruktion wird die zu messende Körpertemperatur von der Zunge über die gut wärmeleitenden Teile 8,9 ausserordentlich schnell auf den Messfühler 7 übertragen.

## Patentansprüche

1. Nuggi-Thermometer, mit einem Lippenschild, einem in einer zentralen Oeffnung des Lippenschildes und von diesem abstehend gehaltenen Gummisauger, einem im Gummisauger angeordneten Temperaturfühler und mit durch den Sauger zu einer Temperatur-Messelektronik zum Speichern, Auswerten und Anzeigen der Messwerte führenden elektrischen Leitern, dadurch gekennzeichnet, dass der Temperaturfühler (7) an einem metallischen Verankerungsteil (8) auf der Saugerinnenseite angebracht ist und dass das genannte Verankerungsteil (8) durch die Saugerwand (4') hindurch mit einem weiteren auf der Saugeraussenseite angeordneten flächigen metallischen Gegenelement (9) verbunden ist, so dass Verankerungsteil (8) und Gegenelement (9) in der Saugerwand festgehalten sind.

2. Nugggi-Thermometer nach Anspruch 1, dadurch gekennzeichnet, dass der Temperaturfühler (7) zwischen Verankerungsteil (8) und Gegenelement (9) eingekapselt ist.

3. Nuggi-Thermometer nach Anspruch 1 oder 2, dadurch gekennzeichnet, dass zumindest das Gegenelement (9) aus Metall mit guter Wärmeleitfähigkeit besteht.

4. Nuggi-Thermometer nach Anspruch 3, dadurch gekennzeichnet, dass das Gegenelement (9) aus verchromtem Metall, wie z.B. Messing, besteht.

5. Nuggi-Thermometer nach Anspruch 3, dadurch gekennzeichnet, dass das Gegenelement (9) aus versilbertem Metall besteht.

## Claims

1. A pacifier thermometer, having a lip shield, a rubber sucker which is located in a central opening of the lip shield and is held so as to protrude therefrom, having a temperature sensor arranged in the rubber sucker and having electric leads leading through the sucker to a temperature measurement electronic means for storing, evaluating and displaying the measured values, wherein the temperature sensor (7) is fitted on a metallic anchoring part (8) on the inside of the sucker and wherein the said anchoring part (8) is connected through the sucker wall (4') to a further flat metallic mating element (9) arranged on the outside of the sucker, so that anchoring part (8) and mating element (9) are secured in the sucker wall.

2. The pacifier thermometer as claimed in claim 1, wherein the temperature sensor (7) is encapsulated between anchoring part (8) and mating element (9).

3. The pacifier thermometer as claimed in claim 1 or 2, wherein at least the mating element (9) consists of metal with a good thermal conductivity.

4. The pacifier thermometer as claimed in claim 3, wherein the mating element (9) consists of chrome plated metal such as, for example, brass.

5. The pacifier thermometer as claimed in claim 3, wherein the mating element (9) consists of silver plated metal.

## Revendications

1. Thermomètre-sucette, comprenant une plaque appui-lèvres, un corps de sucette en caoutchouc saillant de ladite plaque et retenu dans une ouverture centrale de la plaque, une sonde de température prévue à l'intérieur du corps de sucette et ayant des conducteurs électriques menant à un dispositif électronique de mesure de température pour mémoriser, évaluer et visualiser les valeurs mesurées, caractérisé en ce que la sonde de température (7) est prévue sur un élément d'ancrage métallique (8) sur la face intérieure du corps de sucette et en ce que ledit élément d'ancrage (8) est relié à travers la paroi (4') du corps de sucette avec un contre-élément métallique (9) plan prévu sur la face extérieure du corps de sucette, le tout de manière à ce que l'élément d'ancrage (8) et le contre-élément (9) soient fixés dans la paroi du corps de sucette.

2. Thermomètre-sucette selon la revendication 1, caractérisé en ce que la sonde de température ((7) est encapsulée entre l'élément d'ancrage (8) et le contre-élément (9).

3. Thermomètre-sucette selon la revendication 1 ou 2, caractérisé en ce qu'au moins ledit contre-élément est en un métal présentant une bonne conductibilité thermique.

4. Thermomètre-sucette selon la revendication 3, caractérisé en ce que le contre-élément (9) est en un métal chromé, comme par exemple en laiton chromé.

5. Thermomètre-sucette selon la revendication 3, caractérisé en ce que le contre-élément (9) est en un métal argenté.
